# FASCICULE DE BREVET EUROPEEN

(11) **EP 1 591 714 B1**
(45) Date de publication et mention de la délivrance du brevet: **22.11.2006**
(21) Numéro de dépôt: 05290826.6
(22) Date de dépôt: 14.04.2005
(51) Int. Cl.: F16N 7/22

(54) **Dispositif de lubrification d'un composant dans un ensemble de pièces**
Vorrichtung zum Schmieren eines Teils in einem Zusammenbau
Device for lubricating a component in an assembly

(30) Priorité: 29.04.2004 FR 0404545
(43) Date de publication de la demande: 02.11.2005
(73) Titulaire: SNECMA, 75015 Paris (FR)
(72) Inventeur: Servant, Régis, 91270 Vigneux sur Seine (FR); Bouchy, Gaël, 77540 la Chapelle Iger (FR); Lapergue, Guy, 77950 Rubelles (FR)
(74) Mandataire: Ramey, Daniel

(56) Documents cités:
- GB-A- 191 319 555
- US-A- 1 384 470
- US-A- 1 420 585
- US-A- 1 616 002
- US-A- 3 621 937

## Description

La présente invention concerne un dispositif de lubrification d'un composant dans un ensemble de pièces.

Dans un certain nombre de cas, le composant à lubrifier est d'accès difficile et les conduits d'amenée du lubrifiant ne peuvent aboutir directement au composant ou présentent un encombrement trop important autour du composant et des pièces associés à ce composant.

On peut résoudre parfois ce problème en faisant passer les conduits d'amenée de lubrifiant à travers des pièces situées au voisinage du composant mais cette solution n'est pas toujours réalisable en pratique, notamment quand les conduits de lubrifiant doivent traverser des pièces mobiles.

Une autre solution connue consiste à former une chambre de distribution de lubrifiant dans une pièce située au voisinage du composant et à raccorder cette chambre en un ou plusieurs points à une alimentation en lubrifiant et, en un ou plusieurs autres points, à des moyens d'amenée du lubrifiant au composant, comme montré dans le US 3, 621, 737.

Pour des raisons économiques, cette chambre peut être constituée par une rainure ou une gorge annulaire usinée dans une surface de la pièce et fermée de façon étanche au moyen d'une tôle recouvrant la rainure ou la gorge et soudée sur la surface de la pièce.

Cette solution a notamment été appliquée à la lubrification d'un roulement de guidage d'un moyeu solidaire d'un arbre rotatif d'une turbine basse-pression d'un turboréacteur, la chambre de distribution de lubrifiant étant formée par une rainure annulaire usinée dans une surface cylindrique d'une pièce de support de la bague extérieure du roulement.

Cette solution connue résout le problème de l'encombrement mais comporte encore un certain nombre d'inconvénients :
- la rainure annulaire formant la chambre de distribution est usinée dans la pièce de support par fraisage, ce qui peut être relativement difficile et peu commode à faire ;
- cette rainure est fermée par une tôle soudée de façon continue le long de ses bords de part et d'autre de la rainure annulaire, ce qui est assez long et délicat à réaliser ;
- cette fermeture n'est pas démontable ;
- cette solution n'est pas réalisable avec des matériaux qui sont difficilement soudables ou brasables.

L'invention a notamment pour but d'apporter une solution simple, efficace et économique à ces problèmes.

Elle a pour objet un dispositif de lubrification d'un composant, qui ne présente pas les inconvénients précités des dispositifs connus.

Elle propose à cet effet un dispositif de lubrification d'un composant dans un ensemble de pièces, ce dispositif comprenant une chambre de distribution de lubrifiant agencée au voisinage du composant, des moyens d'alimentation de cette chambre en lubrifiant et des moyens reliant la chambre à des moyens d'amenée de lubrifiant dans le composant, caractérisé en ce que ladite chambre est formée par une gorge annulaire d'une bague montée sur une pièce dudit ensemble, cette gorge étant fermée automatiquement au montage de la bague par une surface correspondante de ladite pièce, sur laquelle débouchent des canaux ou conduits formés dans ladite pièce et constituant des moyens d'alimentation de la gorge en lubrifiant et/ou des moyens reliant la gorge aux moyens précités d'amenée de lubrifiant dans le composant.

L'invention présente l'avantage que la chambre de distribution de lubrifiant est formée, non pas dans une pièce massive pour être ensuite fermée par une tôle rapportée, mais dans une bague qui est elle-même montée par appui ou par emmanchement sur la pièce précitée. On évite ainsi une opération d'usinage complexe et coûteuse de la pièce massive. De plus, la fermeture de cette chambre se produit automatiquement au montage de la bague sur la pièce, par application de la partie de la bague comportant la gorge sur une surface correspondante de la pièce, sans qu'il soit nécessaire de souder ou de fixer autrement une tôle de fermeture sur la bague.

De façon simple, la bague est immobilisée sur la pièce entre une butée formée sur la pièce et une pièce rapportée qui est fixée sur la pièce de façon amovible ou démontable, par exemple par vissage.

La bague du dispositif selon l'invention peut donc être montée sur la pièce de façon simple et elle est maintenue en place par une pièce rapportée amovible ou démontable.

Dans le cas précité d'un roulement de guidage d'un moyeu solidaire d'un arbre d'une turbine basse-pression dans un turboréacteur, cette pièce rapportée peut être un rebord d'une bague du roulement, comme on le verra en détail dans ce qui suit.

Dans un mode de réalisation préféré, le dispositif comprend au moins deux joints d'étanchéité qui sont agencés de part et d'autre de la gorge annulaire et serrés entre la bague et la pièce, chaque joint d'étanchéité étant avantageusement logé dans une rainure annulaire de ladite bague.

On assure ainsi une bonne étanchéité de la chambre de distribution formée par la gorge de la bague, cette étanchéité étant obtenue de façon simple et économique, sans nuire à la facilité de montage de la bague sur la pièce.

Dans le mode de réalisation préféré de l'invention, la bague est montée par translation axiale sur au moins une portée cylindrique de la pièce.

Avantageusement, la bague comporte, à l'une de ses extrémités axiales, un rebord annulaire formant un moyen d'accrochage d'un outil de traction, pour le démontage de cette bague.

Ceci permet un démontage simple et rapide de la bague par traction axiale de la bague dans une direction opposée à la pièce.

L'invention est particulièrement mais non exclusivement applicable à un roulement de guidage d'un moyeu solidaire d'un arbre rotatif par rapport à une pièce de support d'une bague de ce roulement, l'arbre rotatif étant par exemple un arbre de turbine basse-pression dans un turboréacteur.

D'autres avantages et caractéristiques de l'invention apparaîtront à la lecture de la description suivante faite à titre d'exemple non limitatif et en référence aux dessins annexés dans lesquels :
- la figure 1 est une vue schématique partielle en coupe axiale d'un dispositif connu de lubrification d'un roulement de guidage d'un moyeu solidaire d'un arbre de turbine basse-pression d'un turboréacteur ;
- la figure 2 est une vue schématique en coupe axiale d'un dispositif de lubrification selon l'invention ;
- la figure 3 est une vue partielle agrandie de la figure 2 ;
- la figure 4 est une autre vue schématique en coupe axiale du dispositif de la figure 2, la coupe étant faite dans un autre plan de coupe de la figure 2.

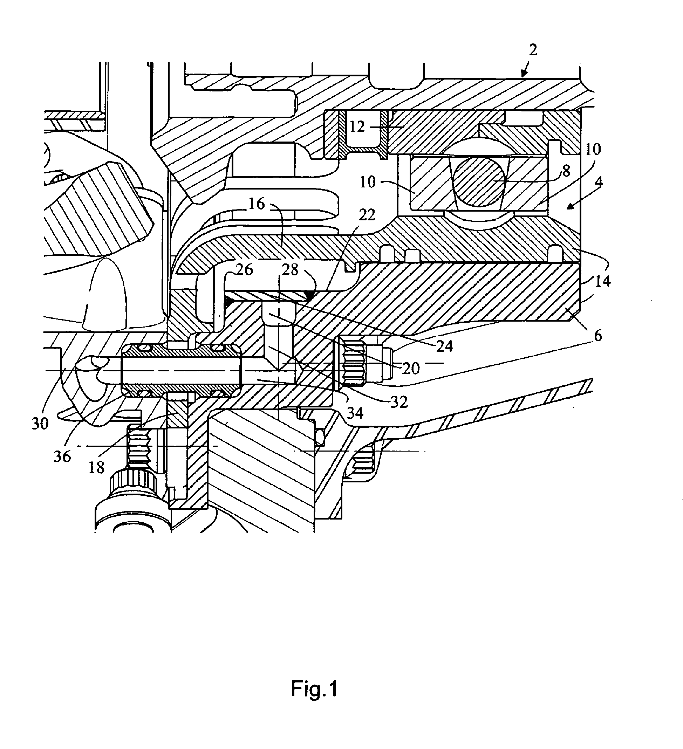

On se réfère d'abord à la figure 1 qui représente une partie d'un dispositif connu de lubrification d'un roulement de guidage d'un moyeu solidaire de l'arbre d'une turbine basse-pression de turboréacteur.

Le moyeu 2 est centré et guidé en rotation par un roulement 4 monté dans un alésage d'une pièce cylindrique de support 6, elle-même montée et fixée sur une pièce fixe, qui est par exemple une pièce du stator d'un compresseur haute-pression du turboréacteur.

Le roulement 4 comprend une pluralité d'organes roulants tels par exemple que des billes 8 qui sont maintenues axialement entre deux éléments annulaires 10 et qui circulent dans un chemin de roulement défini par des bagues 12, 14 du roulement respectivement radialement interne et externe.

La bague radialement interne 12 du roulement est montée fixement sur le moyeu 2 et la bague radialement externe 14 du roulement est montée dans l'alésage de la pièce de support 6.

La bague radialement externe 14 du roulement comprend un prolongement axial 16 s'étendant du côté amont et qui se termine par un rebord annulaire 18 orienté radialement vers l'extérieur et qui vient s'appliquer sur une face radiale d'extrémité de la pièce de support 6 pour y être fixé par des moyens appropriés tels que des vis.

Le dispositif connu de lubrification du roulement 4 comprend une chambre annulaire de distribution de lubrifiant formée par une rainure annulaire 20 d'une surface cylindrique interne 22 de la partie amont de la pièce 6, cette rainure 20 étant fraisée dans la surface cylindrique 22 et fermée par une tôle rapportée 24 soudée en 26 et 28 sur la pièce 6, de façon continue le long de ses bords.

La rainure annulaire 20 est reliée à des moyens d'alimentation en lubrifiant 30 par un conduit radial 32 débouchant dans la chambre de distribution et dans un conduit axial 34 percé dans la pièce 6 et relié aux moyens d'alimentation 30 par l'intermédiaire d'une douille cylindrique 36 dont une extrémité aval est montée à étanchéité dans un orifice cylindrique de la face radiale d'extrémité de la pièce 6, et dont une extrémité amont est montée à étanchéité dans un orifice cylindrique des moyens d'alimentation 30. La partie médiane de la douille 36 s'étend à travers un orifice du rebord annulaire 18 de la bague 14 du roulement.

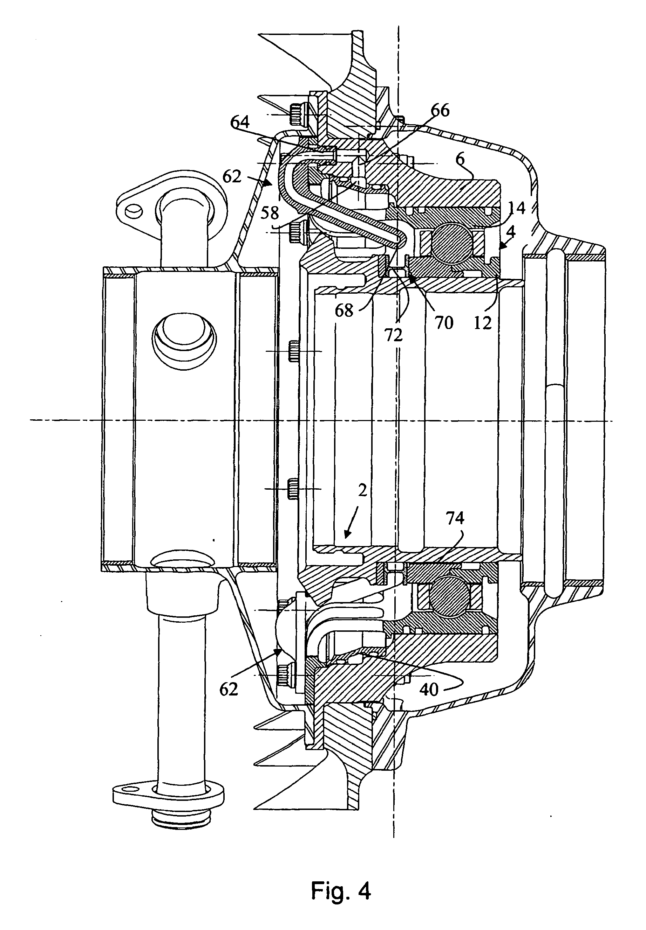

La rainure annulaire 20 de la pièce 6 est reliée à des moyens d'amenée de lubrifiant dans le roulement 4 par des moyens qui seront décrits en détail dans ce qui suit en référence à la figure 4.

Dans le dispositif de lubrification selon l'invention, la rainure 20 usinée dans la pièce 6 pour former la chambre de distribution est remplacée par une gorge annulaire d'une bague d'alimentation rapportée sur la pièce 6.

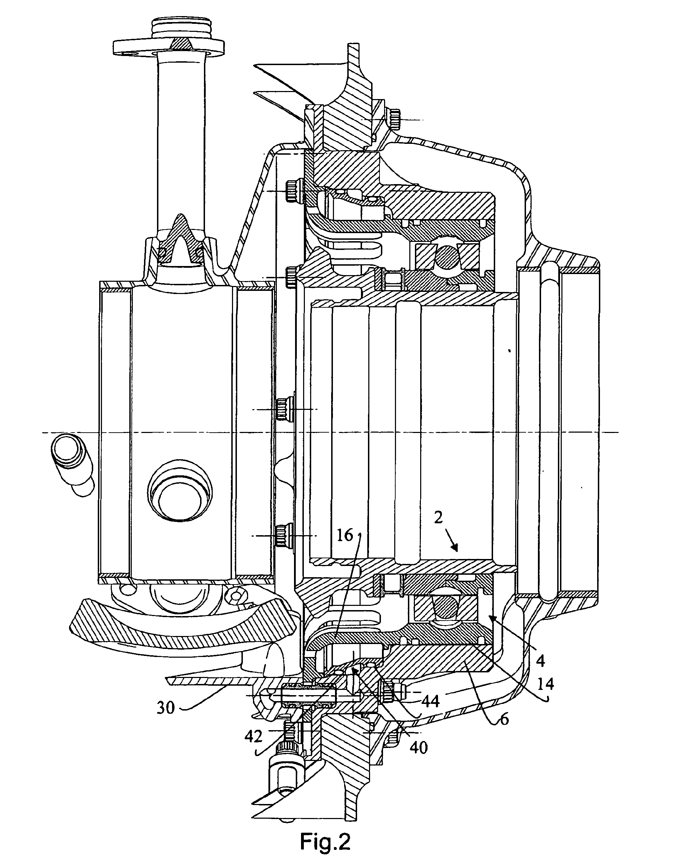

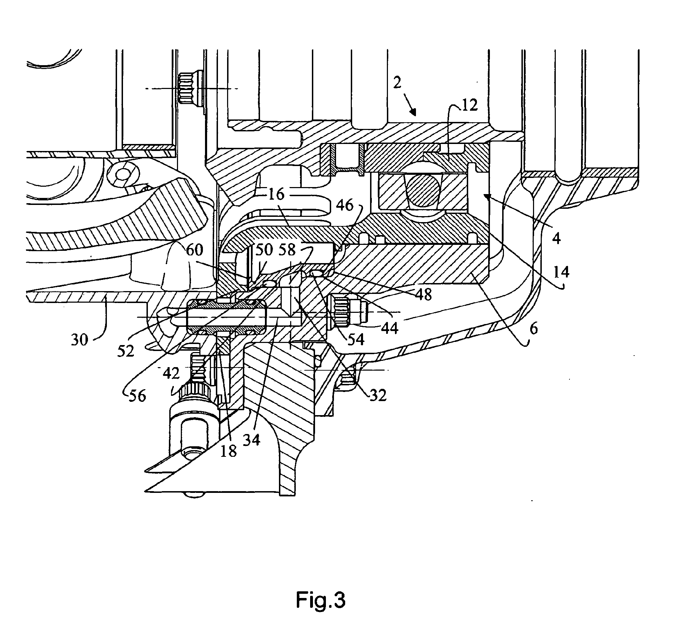

Dans le mode de réalisation représenté aux figures 2 à 4, cette bague 40 est engagée par translation axiale depuis l'amont dans l'alésage de la pièce 6 et s'applique sur deux portées cylindriques 42, 44 de diamètres différents raccordées entre elles, ces portées 42, 44 étant formées dans la partie amont de la pièce 6 autour du prolongement axial 16 de la bague externe 14 du roulement.

La bague d'alimentation 40 comprend une extrémité aval 46 destinée à venir en appui sur un épaulement 48 de la surface interne de la pièce 6, et une extrémité amont 50 qui forme un appui d'une nervure cylindrique 52 du rebord 18 de la bague externe 14 du roulement.

L'épaulement 48 et la nervure 52 constituent des moyens d'immobilisation axiale de la bague d'alimentation 40 dans l'alésage de la pièce 6, ces moyens d'immobilisation étant de manière générale du type à coopération de formes.

La partie aval de la bague 40 appliquée sur la portée cylindrique 44 de la pièce 6 présente une rainure annulaire externe de logement d'un joint d'étanchéité 54 coopérant avec la portée cylindrique 44. La partie amont de la bague 40 présente également une rainure annulaire externe de logement d'un joint d'étanchéité 56 appliqué sur la portée cylindrique 42 de la pièce 6.

Une gorge annulaire 58 est formée dans la bague d'alimentation 40 entre les logements des joints d'étanchéité 54, 56 précités et débouche sur la surface radialement externe de la bague 40. Cette gorge 58 est recouverte extérieurement et fermée par la portée cylindrique 42 de la pièce 6. Un canal radial 32, identique à celui décrit en figure 1, est formé dans la pièce 6 et débouche sur la portée cylindrique 42, dans la gorge 58 pour la relier aux moyens 30 d'alimentation en lubrifiant.

La bague 40 présente avantageusement, à son extrémité amont 50, un rebord annulaire 60 orienté vers l'intérieur qui forme un moyen d'accrochage ou de prise d'un outil approprié, pour le démontage de la bague 40 par traction axiale vers l'amont.

La figure 4 est une autre vue en coupe de l'ensemble représenté en figure 2 et illustre des moyens d'amenée de lubrifiant dans le roulement 4.

Ces moyens comprennent un conduit ou tube 62 coudé sensiblement en forme de J, dont une extrémité 64 orientée vers l'aval passe dans un orifice du rebord annulaire 18 de la bague 14 et est montée à étanchéité dans un alésage de l'extrémité amont de la pièce 6 qui est relié à la gorge 58 de la bague d'alimentation 40 par un canal radial 66 de la pièce 6.

L'autre extrémité du conduit 62 est inclinée vers l'axe du moyeu 2 et vers l'aval et comprend au moins un trou 68 de sortie du lubrifiant débouchant radialement vers un élément annulaire 70 formant une écope centripète 72, qui est monté fixement sur le moyeu 2 entre la bague interne 12 du roulement 4 et un épaulement annulaire du moyeu 2.

L'écope centripète 72 reçoit le lubrifiant sortant du trou 68 du conduit 62 et l'amène à l'intérieur de l'élément 70 jusqu'à l'extrémité amont d'une rainure axiale 74 formée dans la bague interne 12 du roulement et qui est reliée à son extrémité aval à des conduits ou canaux menant aux organes roulants du roulement 4.

Lors du fonctionnement du turboréacteur, l'alimentation en lubrifiant de la gorge 58 de la bague 40 par les moyens 30 peut se faire en continu. Le lubrifiant circule dans les moyens d'alimentation 30, dans la douille 36, les conduits 34, 32, et dans la gorge annulaire 58 de la bague 40. De là, le lubrifiant passe par le canal 66, l'alésage de la pièce 6, puis le conduit 62 et sort par le trou 68 pour être recueilli par l'écope centripète 72 qui l'amène à la rainure axiale 74 de la bague interne 12 du roulement 4.

Plusieurs conduits ou tubes 62 peuvent être raccordés à la gorge annulaire 58 de la bague 40 et sont alors régulièrement répartis sur la circonférence de la pièce de support 6.

La bague d'alimentation 40 est de préférence en métal léger tel que du titane ou de l'aluminium. La gorge annulaire 58 est formée dans cette bague 40 par toute technique appropriée, par exemple par tournage.

## Revendications

1. Dispositif de lubrification d'un composant dans un ensemble de pièces, ce dispositif comprenant une chambre de distribution de lubrifiant agencée au voisinage du composant, des moyens (30) d'alimentation de cette chambre en lubrifiant et des moyens reliant la chambre à des moyens d'amenée de lubrifiant dans le composant, **caractérisé en ce que** ladite chambre est formée par une gorge annulaire (58) d'une bague (40) montée sur une pièce (6) dudit ensemble, cette gorge (58) étant fermée automatiquement au montage de la bague (40) par une surface correspondante de ladite pièce (6), sur laquelle débouchent des canaux ou conduits (32, 34) formés dans ladite pièce (6) et constituant des moyens d'alimentation de la gorge (58) en lubrifiant et/ou des moyens reliant la gorge (58) aux moyens précités d'amenée de lubrifiant dans le composant.

2. Dispositif selon la revendication 1, **caractérisé en ce qu**'il comprend des moyens d'immobilisation de ladite bague (40) sur ladite pièce (6).

3. Dispositif selon la revendication 2, **caractérisé en ce que** les moyens d'immobilisation sont du type à coopération de formes.

4. Dispositif selon l'une des revendications précédentes, **caractérisé en ce que** ladite bague (40) est immobilisée sur la pièce (6) entre une butée formée sur ladite pièce (6) et une pièce rapportée qui est fixée sur ladite pièce (6) de façon amovible ou démontable, par exemple par vissage.

5. Dispositif selon l'une des revendications précédentes, **caractérisé en ce qu**'il comprend au moins un joint d'étanchéité (54, 56) serré entre ladite bague (40) et ladite pièce (6), le long de la gorge annulaire (58).

6. Dispositif selon la revendication 5, **caractérisé en ce qu**'il comprend au moins deux joints d'étanchéité (54, 56) qui sont agencés de part et d'autre de la gorge annulaire (58) et serrés entre ladite bague (40) et ladite pièce (6).

7. Dispositif selon la revendication 5 ou 6, **caractérisé en ce que** le ou chaque joint d'étanchéité (54, 56) est logé dans une rainure annulaire de ladite bague (40).

8. Dispositif selon l'une des revendications précédentes, **caractérisé en ce que** ladite bague (40) est montée par translation axiale sur au moins une portée cylindrique (42, 44) de ladite pièce (6).

9. Dispositif selon l'une des revendications précédentes, **caractérisé en ce que** ladite pièce (6) comprend deux portées cylindriques (42, 44) de diamètres différents raccordées entre elles et sur lesquelles est engagée ladite bague (40).

10. Dispositif selon l'une de revendications précédentes, **caractérisé en ce que** la bague (40) est en métal léger, en particulier en titane ou en aluminium.

11. Dispositif selon l'une des revendications précédentes, **caractérisé en ce que** la gorge (58) est formée dans la bague (40) par tournage.

12. Dispositif selon l'une des revendications précédentes, **caractérisé en ce que** ladite bague (40) comporte, à l'une de ses extrémités axiales (50), un rebord annulaire (60) formant un moyen d'accrochage d'un outil de traction, pour le démontage de cette bague (40).

13. Dispositif selon l'une des revendications précédentes, **caractérisé en ce que** le composant à lubrifier est un roulement de guidage (4) d'un moyeu (2) solidaire d'un arbre rotatif et ladite pièce est une pièce de support (6) d'une bague de ce roulement (4).

14. Dispositif selon la revendication 13, **caractérisé en ce que** l'arbre rotatif est un arbre de turbine basse-pression.

## Claims

1. A device for lubricating a component in an assembly of parts, the device comprising a lubricant distribution chamber arranged in the vicinity of the component, feed means (30) for feeding said chamber with lubricant, and means connecting the chamber to means for taking the lubricant to the component, the device being **characterized in that** said chamber is formed by an annular setback (58) in a ring (40) mounted on one of the parts (6) of said assembly, said setback (58) being closed automatically by a corresponding surface of said part (6) when the ring (40) is mounted thereon, channels or ducts (32, 34) formed in said part (6) opening out into said surface and constituting means for feeding the setback (58) with lubricant and/or means connecting the setback (58) to the above-mentioned means for taking lubricant to the component.

2. A device according to claim 1, **characterized in that** it includes means for preventing said ring (40) from moving on said part (6).

3. A device according to claim 2, **characterized in that** the means for preventing movement are of the type having co-operating shapes.

4. A device according to any preceding claim, **characterized in that** said ring (40) is prevented from moving on the part (6) between an abutment formed on said part (6) and a fitting which is secured to said part (6) in removable or detachable manner, e.g. by screw-fastening.

5. A device according to any preceding claim, **characterized in that** it includes at least one gasket (54, 56) clamped between said ring (40) and said part (6), along the annular setback (58).

6. A device according to claim 5, **characterized in that** it includes at least two gaskets (54, 56) which are arranged on either side of the annular setback (58) and clamped between said ring (40) and said part (6).

7. A device according to claim 5 or claim 6, **characterized in that** the or each gasket (54, 56) is housed in an annular groove in said ring (40).

8. A device according to any preceding claim, **characterized in that** said ring (40) is mounted to move in axial translation on at least one cylindrical bearing surface (42, 44) of said part (6).

9. A device according to any preceding claim, **characterized in that** said part (6) has two cylindrical bearing surfaces (42, 44) of different diameters that are interconnected and on which said ring (40) is engaged.

10. A device according to any preceding claim, **characterized in that** said ring (40) is made of light metal, in particular of titanium or of aluminum.

11. A device according to any preceding claim, **characterized in that** the setback (58) is formed in the ring (40) by turning.

12. A device according to any preceding claim, **characterized in that** said ring (40) includes an annular rim (60) at one of its axial ends (50), the rim forming catch means for being engaged by a traction tool for detaching said ring (40).

13. A device according to any preceding claim, **characterized in that** the component for lubricating is a bearing (4) for guiding a hub (2) secured to a rotary shaft, and said part is a support part (6) for supporting a ball-race of the bearing (4).

14. A device according to claim 13, **characterized in that** the rotary shaft is a low pressure turbine shaft.

## Patentansprüche

1. Vorrichtung zum Schmieren einer Komponente in einem Zusammenbau aus Teilen, wobei diese Vorrichtung umfasst: eine Kammer zum Verteilen von Schmiermittel, welche in der Nähe der Komponente angeordnet ist, Mittel (30) zum Versorgen dieser Kammer mit Schmiermittel, und Mittel, welche die Kammer mit Mitteln zum Zuführen von Schmiermittel in die Komponente verbinden, **dadurch gekennzeichnet, dass** die Kammer gebildet ist aus: einer ringförmigen Kehle (58) eines Rings (40), welcher an einem Teil (6) dieses Zusammenbaus angebracht ist, wobei die Kehle (58) automatisch bei der Montage des Rings (40) von einer zugehörigen Fläche des Teils (6) geschlossen wird, auf welcher Kanäle oder Leitungen (32, 34) münden, welche in diesem Teil (6) ausgebildet sind, und welche Mittel zum Versorgen der Kehle (58) mit Schmiermittel bilden, und/oder Mittel, welche die Kehle (58) mit den vorher genannten Mitteln zum Zuführen von Schmiermittel in die Komponente verbinden.

2. Vorrichtung gemäß Anspruch 1, **dadurch gekennzeichnet, dass** sie Mittel zum Immobilisieren des Rings (40) auf dem Teil (6) umfasst.

3. Vorrichtung gemäß Anspruch 2, **dadurch gekennzeichnet, dass** die Immobilisier-Hilfsmittel von einem derartigen Typ sind, dass sie formschlüssig zusammenwirken.

4. Vorrichtung gemäß einem der vorhergehenden Ansprüche, **dadurch gekennzeichnet, dass** der Ring (40) auf dem Teil (6) zwischen einem auf dem Teil (6) gebildeten Anschlag und einem eingebrachten Teil, welches auf dem Teil (6) in einer abnehmbaren oder demontierbaren Weise, beispielsweise mittels Verschraubens, befestigt ist, immobilisiert wird.

5. Vorrichtung gemäß einem der vorhergehenden Ansprüche, **dadurch gekennzeichnet, dass** sie zumindest eine Dicht-Verbindung (54, 56) umfasst, welche entlang der ringförmigen Kehle (58) zwischen den Ring (40) und das Teil (6) geklemmt ist.

6. Vorrichtung gemäß Anspruch 5, **dadurch gekennzeichnet, dass** sie zumindest zwei Dicht-Verbindungen (54, 56) umfasst, welche beiderseits der ringförmigen Kehle (58) angeordnet sind, und zwischen den Ring (40) und das Teil (6) geklemmt sind.

7. Vorrichtung gemäß Anspruch 5 oder 6, **dadurch gekennzeichnet, dass** die oder jede Dicht-Verbindung (54, 56) in einer ringförmigen Rille des Rings (40) aufgenommen ist.

8. Vorrichtung gemäß einem der vorhergehenden Ansprüche, **dadurch gekennzeichnet, dass** der Ring (40) mittels axialer Verschiebung auf zumindest einem zylindrischen (42,44) Träger des Teils (6) montiert ist.

9. Vorrichtung gemäß einem der vorhergehenden Ansprüche, **dadurch gekennzeichnet, dass** das Teil (6) zwei zylindrische Träger (42, 44) von unterschiedlichem Durchmesser umfasst, welche untereinander verbunden sind, und an welchen der Ring (40) angreift.

10. Vorrichtung gemäß einem der vorhergehenden Ansprüche, **dadurch gekennzeichnet, dass** der Ring (40) aus Leichtmetall ist, insbesondere aus Titan oder aus Aluminium.

11. Vorrichtung gemäß einem der vorhergehenden Ansprüche, **dadurch gekennzeichnet, dass** die Kehle (58) in dem Ring (40) durch Drehen gebildet ist.

12. Vorrichtung gemäß einem der vorhergehenden Ansprüche, **dadurch gekennzeichnet, dass** der Ring (40) an einem seiner axialen Enden (50) einen ringförmigen Rand (60) umfasst, welcher ein Hilfsmittel zum Einrasten eines Abzieh-Werkzeugs zur Demontage dieses Rings (40) bildet.

13. Vorrichtung gemäß einem der vorhergehenden Ansprüche, **dadurch gekennzeichnet, dass** die zu schmierende Komponente ein Rollenlager zum Führen (4) einer mit einer drehbaren Welle verbundenen Nabe (2) ist, und das Teil ein Teil (6) zum Tragen eines Rings dieses Rollenlagers (4) ist.

14. Vorrichtung gemäß Anspruch 13, **dadurch gekennzeichnet, dass** die drehbare Welle eine Niederdruck-Turbinen-Welle ist.
